# EUROPÄISCHE PATENTANMELDUNG

(11) **EP 1 550 592 A2**
(43) Veröffentlichungstag der Anmeldung: **06.07.2005**
(21) Anmeldenummer: 04026426.9
(22) Anmeldetag: 08.11.2004
(51) Int. Cl.: B60S 1/34

(54) **Wischarm, Gelenkarm für einen Wischarm sowie Verfahren zur Herstellung eines Wischarms**

(30) Priorität: 29.12.2003 DE 10361742
(71) Anmelder: ROBERT BOSCH GMBH, 70442 Stuttgart (DE)
(72) Erfinder: Mayer, Stefan, 76137 Karlsruhe (DE); Ritt, Jean-Marc, 67000 Strasbourg (FR)

(57) **Zusammenfassung**

Die Erfindung geht aus von einem Wischarm für eine Scheibenwischanlage mit einem Befestigungsteil (12) zum Verbinden mit einer aus einer Karosserie ragenden Antriebswelle, wobei das Befestigungsteil (12) gelenkig mit einem Gelenkarm (14) verbunden ist und das Befestigungsteil (12) zumindest bereichsweise mit einer Kapsel (34) abdeckbar ist.

Es wird vorgeschlagen, dass der Gelenkarm (14) in zumindest einer sich an seiner Längserstreckung erstreckenden Seitenfläche (22, 24) einen von der Kapsel (34) zumindest bereichsweise überdeckbaren Überdeckungsbereich (28) aufweist. Ferner wird ein Gelenkarm für einen Wischarm vorgeschlagen sowie ein Verfahren zur Herstellung eines Wischarms.

## Beschreibung

### Stand der Technik

Die Erfindung geht aus von einem Wischarm, von einem Gelenkarm für einen Wischarm sowie von einem Verfahren zur Herstellung eines Wischarms nach den Oberbegriffen der unabhängigen Ansprüche.

Wischeranlagen mit einem oder mehreren Scheibenwischern für Kraftfahrzeuge werden mit deren Wischerlagern an der Karosserie des Kraftfahrzeugs befestigt. Eine Motorwelle eines Wischermotors treibt beispielsweise über ein Gestänge Kurbeln an, die mit einem Ende einer Antriebswelle für jeden Scheibenwischer fest verbunden sind. Die Antriebswelle bzw. die Lagerachse ist in einem Wischerlager gelagert. Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt in der Regel ein mit der Antriebswelle drehfest verbundenes Befestigungsteil, das gelenkig mit einem Gelenkarm verbunden ist. Bei bekannten Wischeranlagen ist das Befestigungsteil zumindest bereichsweise mit einer Kapsel abgedeckt, die gekippt werden kann, um die Antriebswelle zum Anschrauben des Wischarms an die Antriebswelle freizugeben. Ebenso kann der Gelenkarm gegenüber dem Befestigungsteil abgeklappt werden.

Heutige Gelenkarmformen begrenzen den Abklappwinkel der Kapsel auf einen Winkelbereich von weniger als 30°. Es ist bekannt, durch Geometrieänderungen, wie beispielsweise Hinterschneidungen, dieses Problem zu verbessern, jedoch kann durch notwendige Querschnittsänderungen die Tragfähigkeit des Gelenks vermindert werden. Dies tritt besonders dann auf, wenn kleine Spaltweiten zwischen Kapsel und Gelenkarm angestrebt werden.

Ein üblicher Wischarm ist beispielsweise aus der FR 2 762 567 A1 bekannt.

### Vorteile der Erfindung

Die Erfindung geht aus von einem Wischarm für eine Scheibenwischanlage mit einem Befestigungsteil zum Verbinden mit einer Antriebswelle, wobei das Befestigungsteil gelenkig mit einem Gelenkarm verbunden ist.

Es wird vorgeschlagen, dass der Gelenkarm in zumindest einer sich an seiner Längserstreckung erstreckenden Seitenfläche einen von der Kapsel zumindest bereichsweise überdeckbaren Überdeckungsbereich aufweist. Dadurch kann eine besonders kleine Spaltbreite zwischen der Kapsel und dem Gelenkarm erreicht werden. Ein Drehgelenk ist vor Verschmutzung geschützt. Es kann ein größerer Winkel beim Verkippen der Kapsel, vorzugsweise zur Montage des Wischarms an eine Antriebswelle, erreicht werden. Ein Werker kann ohne Behinderung durch die Kapsel den Wischarm an einer Antriebswelle, vorzugsweise durch Anschrauben an eine Stirnfläche der Antriebswelle, befestigen. Der Wischarm kann ergonomisch und sicher montiert werden. Eine Positionierung des Wischarms und eine Montage an einem Fahrzeug wird erleichtert. Ebenso kann der Winkel vergrößert werden, mit dem der Gelenkarm im Gebrauch abgeklappt werden kann, beispielsweise beim Entfernen von Schmutz oder Eis von einer Windschutzscheibe. Die Erfindung ermöglicht größere Freiheiten bei der Wahl eines Designs für die Kapsel oder die Form des Gelenkarms. Besonders günstig ist die Erfindung für einen Gelenkarm aus Kunststoff.

Eine vorteilhafte Stabilisierung des überdeckten Bereichs ist möglich, wenn zumindest eine Seitenfläche des Gelenkarms im Überdeckungsbereich eine in einen Innenraum des Gelenkarms gerichtete Vertiefung in der Art einer Versteifungssicke aufweist. Die Vertiefung behindert eine mechanische Spannungsüberhöhung am Gelenkarm in einem mechanisch hoch belasteten Bereich. Die Festigkeit des Gelenkarms kann erhöht werden.

Eine günstige Geometrie kann erreicht werden, wenn die Vertiefung halbmondförmig ausgebildet ist. Die Kapsel kann beim Verkippen oder beim Abklappen des Gelenkarms über die Vertiefung hinweggleiten, ohne von dem Gelenkarm behindert zu werden. Dadurch wird ein größerer Abklappwinkel möglich. Gleichzeitig kann eine unveränderte Außengeometrie in den nicht überdeckten Bereichen des Gelenkarms beibehalten werden. Abhängig von verwendeten Materialien, Materialstärken sowie gewählten geometrischen Abmessungen sind auch andere geeignete Formen der Vertiefung denkbar, etwa ovale, runde, rechteckige, die bedarfsabhängig ausgewählt werden können.

Eine maximale mechanische Spannung lässt sich vorteilhaft begrenzen, wenn die Vertiefung verrundete Konturen aufweist. Durch die Position der Vertiefung werden mechanische Eigenschaften des Gelenkarms nicht geschwächt.

Vorzugsweise weist die Vertiefung eine Wandstärke auf, die vergleichbar mit einer durchschnittlichen Wandstärke außerhalb des Überdeckungsbereichs ist. Auch dies ist günstig für die mechanische Stabilität des Wischarms.

Ist der Überdeckungsbereich im Bereich einer Drehachse des Gelenkarms angeordnet, wird die mechanische Stabilität nur wenig beeinflusst, da die Vertiefung in einem mechanisch weniger beanspruchten Gebiet liegt und durch ihre Verrundung maximal auftretende Spannungen reduziert werden.

Ferner wird ein Gelenkarm für einen Wischarm einer Scheibenwischanlage vorgeschlagen, bei der an einem Ende zumindest in einer Seitenfläche eine sich in einen Innenraum erstreckende Vertiefung angeordnet ist. Vorzugsweise ist die Vertiefung halbmondförmig ausgebildet und weist eine verrundete Kontur auf.

Eine vorteilhafte Formgebung ist möglich, wenn die Seitenflächen im Bereich der Vertiefung einen geringeren Abstand zueinander aufweisen als ein durchschnittlicher Abstand entlang der Längserstreckung.

Weiterhin wird ein Verfahren zur Herstellung eines Wischarms vorgeschlagen, bei dem in einem Werkzeug in zumindest einer Seitenfläche eines Gelenkarms des Wischarms ein Überdeckungsbereich mit einer in einen Innenraum des Gelenkarms gerichteten Vertiefung gebildet wird.

Vorteilhaft ist, dass der Überdeckungsbereich durch einen einteiligen Schieber im Werkzeug entformt werden, der in einer Längserstreckung des Gelenkarms bewegt wird. Alternativ kann der Überdeckungsbereich durch einen zweiteiligen oder mehrteiligen Schieber im Werkzeug entformt werden, wobei zumindest ein Teil des Schiebers senkrecht einer Längserstreckung des Gelenkarms bewegt wird. Dabei kann auch die Kontur der Vertiefung leicht geändert werden. Die Herstellung des Gelenkarms ist unproblematisch. Die Entformrichtung des Schiebers, mit dem der Gelenkbereich des Gelenkarms bzw. der Überdeckungsbereich zwischen einer Kapsel und dem Gelenkarm in dem Werkzeug gebildet wird, erfährt praktisch keine Beeinflussung durch die Form der Vertiefung, insbesondere treten auch bei stark veränderten Entformrichtungen keine Hinterschnitte auf.

### Zeichnungen

Die Erfindung wird nachfolgend in einem Ausführungsbeispiel anhand der zugehörigen Zeichnungen näher erläutert. Es zeigen:
- Fig. 1: eine Aufsicht auf einen Wischarm mit Gelenkarm und einer Wischblatteinheit;
- Fig. 2: ein Detail der Anordnung aus Fig. 1 mit einem abgeklappten Gelenkarm; und
- Fig. 3: eine schräge Aufsicht auf einen Gelenkarm.

### Beschreibung des Ausführungsbeispiels

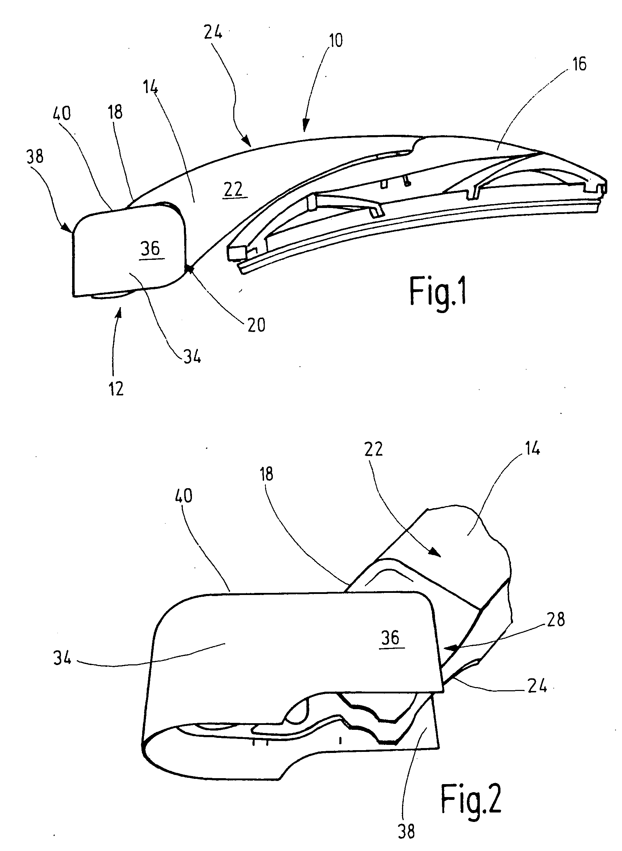

Fig. 1 zeigt eine Schrägansicht des Wischarms 10 mit montierter Kapsel 34, Gelenkarm 14 sowie einer Wischblatteinheit 16. In den Figuren werden gleiche Bezugszeichen für gleiche Teile verwendet.

Der Wischarm 10 besitzt ein Befestigungsteil 12, das gelenkig mit dem Gelenkarm 14 verbunden ist. Der Gelenkarm 14 weist sich an einer Längserstreckung erstreckende, sich gegenüberliegende Seitenflächen 22, 24 auf. An einem Ende der Längserstreckung des Gelenkarms 14 ist die Wischblatteinheit 16 eingehängt. Am gegenüberliegenden Ende schließt sich das Befestigungsteil 12 an. Das Befestigungsteil 12 besitzt eine nicht dargestellte Lagerstelle, über die das Befestigungsteil 12 über ein nicht dargestelltes Befestigungsmittel mit einer nicht dargestellten Antriebswelle drehfest verbindbar ist. Alternativ können andere geeignete Befestigungsarten gewählt werden.

Das Befestigungsteil 12 ist zumindest im Bereich der Verbindung zur Antriebswelle durch die zur Freigabe einer Bohrung kippbar befestigte Kapsel 34 abgedeckt. Die Kapsel 34 weist sich zu dem Gelenkarm 14 hin erstreckende Seitenflügel 36, 38 auf, die den Gelenkarm 14 in einem Überdeckungsbereich 28 zwischen Befestigungseinheit 12 und Gelenkarm 14 zumindest bereichsweise überdecken. Ein Finger 18 des Gelenkarms 14 erstreckt sich in eine Öffnung an einer Oberseite 40 der Kapsel 34.

Fig. 2 zeigt ein Detail des Wischarms 10 aus Fig. 1 mit abgeklapptem Gelenkarm 14. Ein Finger 18 des Gelenkarms 14 erstreckt sich zur Kapsel 34 und greift in eine Öffnung an einer Oberseite 40 der Kapsel 34 ein. Die Öffnung erlaubt eine Schwenkbewegung des Fingers 18 nach unten. Seitenflügel 36, 38 der Kapsel 34 ragen in einen Überdeckungsbereich 28 der Seitenflächen 22, 24 des Gelenkarms 14, der bei nicht abgeklapptem Gelenkarm 14 von den Seitenflügeln 36, 38 überdeckt ist.

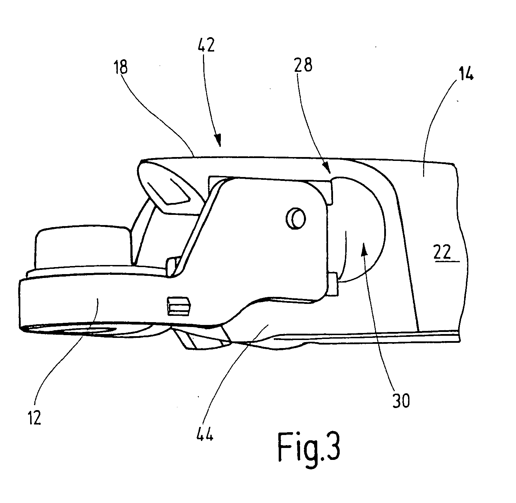

Fig. 3 zeigt eine schräge Aufsicht auf einen Gelenkarm 14. Zur Funktion der einzelnen Komponenten wird auf die vorhergehenden Figuren verwiesen. Eine Seitenfläche 22 des Gelenkarms 14 weist an einem Ende 42 in einem Überdeckungsbereich 28 eine in einen Innenraum des Gelenkarms 14 gerichtete, halbmondförmige Vertiefung 30 mit verrundeten Konturen und weichen Übergängen in der Art einer Versteifungssicke auf. Die gegenüberliegende, nicht sichtbare Seitenfläche 24 des Gelenkarms 14 ist gleichartig ausgebildet.

Abhängig von verwendeten Materialien, Materialstärken sowie gewählten geometrischen Abmessungen sind auch andere geeignete Formen der Vertiefung 30 denkbar, etwa ovale, runde, rechteckige, die bedarfsabhängig ausgewählt werden können.

Der Überdeckungsbereich 28 ist im Bereich einer Drehachse des Gelenkarms 14 angeordnet, der bei einer rotatorischen Bewegung zwischen Kapsel 34 bzw. Befestigungsteil 12 und Gelenkarm 14 von Seitenflächen 36, 38 der Kapsel 34 überstrichen wird. Im Bereich des Überdeckungsbereichs 28 verjüngt sich der Gelenkarm 14 insgesamt, so dass die Seitenflächen 22, 24 an dem einer Befestigungseinheit 12 zugewandten Ende 42 des Gelenkarms 14 einen geringeren Abstand zueinander aufweisen als einem durchschnittlichen Abstand entlang der Längserstreckung entspricht. Abhängig von einem gewählten Design kann der Abstand im Überdeckungsbereich 28 auch unverändert bleiben oder sich vergrößern. Im unteren Bereich des Gelenkarms 14 setzen sich die Seitenflächen 22, 24 des Gelenkarms 14 mit schmalen Fingern 44, 46 fort und erstrecken sich in etwa so weit unterhalb der Befestigungseinheit 12, wie sich ein Finger 18 des Gelenkarms 14 in einem oberen Bereich des Gelenkarms 14 erstreckt.

## Patentansprüche

1. Wischarm für eine Scheibenwischanlage mit einem Befestigungsteil (12) zum Verbinden mit einer aus einer Karosserie ragenden Antriebswelle, wobei das Befestigungsteil (12) gelenkig mit einem Gelenkarm (14) verbunden ist und das Befestigungsteil (12) zumindest bereichsweise mit einer Kapsel (34) abdeckbar ist, **dadurch gekennzeichnet, dass** der Gelenkarm (14) in zumindest einer sich an seiner Längserstreckung erstreckenden Seitenfläche (22, 24) einen von der Kapsel (34) zumindest bereichsweise überdeckbaren Überdeckungsbereich (28) aufweist.

2. Wischarm nach Anspruch 1, **dadurch gekennzeichnet, dass** zumindest eine der Seitenflächen (22, 24) des Gelenkarms (14) im Überdeckungsbereich (28) eine in einen Innenraum des Gelenkarms (14) gerichtete Vertiefung (30) aufweist.

3. Wischarm nach Anspruch 2, **dadurch gekennzeichnet, dass** die Vertiefung (30) halbmondförmig ausgebildet ist.

4. Wischarm nach Anspruch 2 oder 3, **dadurch gekennzeichnet, dass** die Vertiefung (30) verrundete Konturen aufweist.

5. Wischarm nach einem der Ansprüche 2 bis 4, **dadurch gekennzeichnet, dass** die Vertiefung (30) eine Wandstärke aufweist, die vergleichbar mit einer durchschnittlichen Wandstärke außerhalb des Überdeckungsbereichs (28) ist.

6. Wischarm nach einem der vorhergehenden Ansprüche, **dadurch gekennzeichnet, dass** der Überdeckungsbereich (28) im Bereich einer Drehachse des Gelenkarms (14) angeordnet ist.

7. Gelenkarm für einen Wischarm (10) für eine Scheibenwischanlage, mit Seitenflächen (22, 24), die sich längs einer Längserstreckung des Gelenkarms (14) erstrecken, **dadurch gekennzeichnet, dass** an einem Ende (42) zumindest in einer Seitenfläche (22, 24) eine sich in einen Innenraum erstreckende Vertiefung (30) angeordnet ist.

8. Gelenkarm nach Anspruch 7, **dadurch gekennzeichnet, dass** die Vertiefung (30) halbmondförmig ausgebildet ist.

9. Gelenkarm nach Anspruch 7 oder 8, **dadurch gekennzeichnet, dass** die Vertiefung (30) eine verrundete Kontur aufweist.

10. Gelenkarm nach einem der Ansprüche 7 bis 9, **dadurch gekennzeichnet, dass** die Seitenflächen (22, 24) im Bereich der Vertiefung (30) einen geringeren Abstand zueinander aufweisen als ein durchschnittlicher Abstand entlang einer Längserstreckung.

11. Verfahren zur Herstellung eines Wischarms (10) für eine Scheibenwischanlage mit einem Befestigungsteil (12) zum Verbinden mit einer aus einer Karosserie ragenden Antriebswelle, wobei ein Befestigungsteil (12) gelenkig mit einem Gelenkarm (14) verbunden wird, **dadurch gekennzeichnet, dass** in einem Werkzeug in zumindest einer Seitenfläche (22, 24) des Gelenkarms (14) ein Überdeckungsbereich (28) mit einer in einen Innenraum des Gelenkarms (14) gerichteten Vertiefung (30) gebildet wird.

12. Verfahren nach Anspruch 11, **dadurch gekennzeichnet, dass** der Überdeckungsbereich (28) durch einen einteiligen Schieber im Werkzeug entformt wird, der in einer Längserstreckung des Gelenkarms (14) bewegt wird.

13. Verfahren nach Anspruch 11, **dadurch gekennzeichnet, dass** der Überdeckungsbereich (28) durch einen zweiteiligen Schieber im Werkzeug entformt wird, wobei zumindest ein Teil des Schiebers senkrecht zu einer Längserstreckung des Gelenkarms (14) bewegt wird.
